(19) Europäisches Patentamt
European Patent Office
Office européen des brevets

(11) Veröffentlichungsnummer: **0 133 236**
**B1**

(12) **EUROPÄISCHE PATENTSCHRIFT**

(45) Veröffentlichungstag der Patentschrift: **01.06.88**

(51) Int. Cl.⁴: **C 08 L 67/00**, C 08 L 67/02, C 08 L 79/08, C 08 L 9/00

(21) Anmeldenummer: **84108289.4**

(22) Anmeldetag: **14.07.84**

(54) **Thermoplastische Formmassen.**

(30) Priorität: **28.07.83 DE 3327273**
**13.10.83 DE 3337295**

(43) Veröffentlichungstag der Anmeldung:
**20.02.85 Patentblatt 85/8**

(45) Bekanntmachung des Hinweises auf die Patenterteilung:
**01.06.88 Patentblatt 88/22**

(84) Benannte Vertragsstaaten:
**DE FR GB IT NL**

(56) Entgegenhaltungen:
**EP - A - 0 019 126**
**EP - A - 0 033 011**
**EP - A - 0 064 689**
**FR - A - 2 311 815**
**FR - A - 2 372 199**
**US - A - 4 390 665**
**US - A - 4 393 168**
**US - A - 4 430 484**

(73) Patentinhaber: **BAYER AG, Konzernverwaltung RP Patentabteilung, D-5090 Leverkusen 1 Bayerwerk (DE)**

(72) Erfinder: **Nouvertné, Werner, Dr., Scheiblerstrasse 95, D-4150 Krefeld (DE)**
Erfinder: **Stix, Wolfgang, Dr., Freudenbergstrasse 56b, D-6901 Neckarsteinach (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung sind thermoplastische Formmassen enthaltend

(A) 95 bis 50 Gew.-Teile thermoplastische, aromatische Polycarbonate mit Gewichtsmittelmolekulargewichten $\overline{M}_w$ zwischen 10 000 und 200 000 ($\overline{M}_w$ ermittelt mittels Lichtstreuung),

(B) 50 bis 5 Gew.-Teile thermoplastische Polyalkylenterephthalate und gegebenenfalls

(C) 0 bis 30, vorzugsweise 1 bis 20, insbesondere 3 bis 15 Gew.-Teile eines kautschukelastischen Polymerisats mit einer Glasübergangstemperatur von unter −20°C, wobei die Summe der Gewichtsteile aus (A) + (B) + (C) jeweils 100 Gew.-Teile beträgt, dadurch gekennzeichnet, dass die Polycarbonatkomponente (A) 1 bis 20 Gew.-%, vorzugsweise 1 bis 16 Gew.-% und insbesondere 2 bis 10 Gew.-%, bezogen auf die Summe aus (A) + (D), eines Thermoplasten (D) auf Polyetherimidbasis enthält.

Die Komponenten (A) bis (D)

Die Komponente (A)

Unter aromatischen Polycarbonaten (A) im Sinne dieser Erfindung werden die bekannten Homopolycarbonate, Copolycarbonate und Mischungen dieser Polycarbonate verstanden, denen z.B. mindestens eines der folgenden Diphenole zugrundeliegt:
Hydrochinon,
Resorcin,
Dihydroxydiphenyle,
Bis-(hydroxyphenyl)-$C_1$-$C_8$-alkane,
Bis-(hydroxyphenyl)-$C_5$-$C_6$-cycloalkane,
Bis-(hydroxyphenyl)-sulfide,
Bis-(hydroxyphenyl)-ether
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole.

Diese und weitere geeignete Diphenole sind z.B. in den US-PS 3 028 365, 3 275 601, 3 148 172, 3 062 781, 2 991 273 und 2 999 846 beschrieben.

Bevorzugte Diphenole sind z.B.
4,4'-Dihydroxydiphenyl,
2,4-Bis-(4-hydroxyphenyl)-2-methylbutan,
α,α'-Bis-(4-hydroxyphenyl)-p-diisopropylbenzol,
Bis-(4-hydroxyphenyl)-ether,
Bis-(4-hydroxyphenyl)-sulfon und
Bis-(4-hydroxyphenyl)-keton.

Besonders bevorzugte Diphenole sind z.B.:
2,2-Bis-(4-hydroxyphenyl)-propan,
Bis-(hydroxyphenyl)-methan,
Bis-(4-hydroxyphenyl)-sulfon und
1,1-Bis-(4-hydroxyphenyl)-cyclohexan.

Die aromatischen Polycarbonate (A) können durch den Einbau geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Polycarbonate (A) sollen in der Regel mittlere Molekulargewichte $\overline{M}_w$ von 10 000 bis 200 000, vorzugsweise von 20 000 bis 80 000 haben, ermittelt durch Lichtstreuung.

Den hochmolekularen Polycarbonaten mit $\overline{M}_w$ von 10 000 bis 200 000 können auch kleine Anteile niedermolekularer Polycarbonate, z.B. mit einem mittleren Polykondensationsgrad von 2 bis 20, zugemischt sein.

Zur Einstellung des Molekulargewichts $\overline{M}_w$ der Polycarbonate (A) werden in bekannter Weise Kettenabbrecher, wie beispielsweise Phenol, Halogenphenole oder Alkylphenole, in den berechneten Mengen eingesetzt.

Die Herstellung der erfindungsgemässen einzusetzenden Polycarbonate (A) erfolgt in bekannter Weise entweder nach dem Phasengrenzflächenverfahren oder nach dem Verfahren in homogener Lösung (Pyridinverfahren) oder gegebenenfalls nach dem Schmelzumesterungsverfahren.

Die Komponente (B)

Polyalkylenterephthalate (B) im Sinne der Erfindung sind Reaktionsprodukte aus aromatischen Dicarbonsäuren oder ihren reaktionsfähigen Derivaten (z.B. Dimethylestern) und aliphatischen, cycloaliphatischen oder araliphatischen Diolen und Mischungen dieser Reaktionsprodukte.

Bevorzugte Polyalkylenterephthalate (B) lassen sich aus Terephthalsäure (oder ihren reaktionsfähigen Derivaten, z.B. Dimethylterephthalat) und aliphatischen oder cycloaliphatischen Diolen mit 2-10 C-Atomen nach bekannten Methoden herstellen (Kunststoff-Handbuch, Bd. VIII, S. 695 ff, Carl Hanser Verlag, München 1973).

Bevorzugte Polyalkylenterephthalate (B) enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate (B) können neben Terephthalsäureresten bis zu 20 Mol-% Reste anderer aromatischer oder cycloaliphatischer Dicarbonsäuren mit 8–14 C-Atomen oder aliphatischer Dicarbonsäuren mit 4–12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate (B) können neben Ethandiol- bzw. Butandiol-1,4-resten bis zu 20 Mol-% anderer aliphatischer Diole mit 3–12 C-Atomen oder cycloaliphatischer Diole mit 6–21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexan)-propan, 2,4-Dihydroxy-1,1,3,3-tetramethylcyclo-

butan, 2,2-Bis-(3-β-hydroxy-ethoxyphenyl)-propan und 2,2-Bis-(4-hydroxypropoxy-phenyl)-propan (DE-OS 2 407 674, 2 407 776, 2 715 932).

Die Polyalkylenterephthalate (B) können durch Einbau relativ kleiner Mengen 3- oder 4-wertiger Alkohole oder 3- oder 4-basischer Carbonsäuren, wie sie z.B. in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate (B), die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate (B) sind auch Copolyester, die aus mindestens zwei der obengenannten Säurekomponenten und/oder aus mindestens zwei der obengenannten Alkoholkomponenten hergestellt sind; besonders bevorzugte Copolyester sind Poly-(ethylenglykol/butandiol-1,4)-terephthalate.

Die als Komponente (B) vorzugsweise verwendeten Polyalkylenterephthalate besitzen im allgemeinen eine Intrinsic-Viskosität von 0,4 bis 1,5 dl/g, vorzugsweise 0,5–1,3 dl/g, insbesondere 0,6–1,2 dl/g, jeweils gemessen in Phenol/o-Dichlorbenzol (1:1 Gew.-Tl.) bei 25°C.

Die Komponente (C)

Erfindungsgemäss einsetzbare kautschukelastische Polymerisate (C) umfassen Copolymerisate, insbesondere Pfropfcopolymerisate, mit Glasübergangstemperaturen von unter −20°C, die im wesentlichen aus mindestens zwei der folgenden Monomeren erhältlich sind: Chloropren, Butadien, Isopren, Isobuten, Styrol, Acrylnitril, Ethylen, Propylen, Vinylacetat und (Meth-)Acrylsäureester mit 1–18 C-Atomen in der Alkoholkomponente; also Polymerisate, wie sie z.B. in «Methoden der Organischen Chemie», (Houben-Weyl), Bd. 14/1, Georg Thieme Verlag, Stuttgart 1961, S. 393–406, und in C.B. Bucknall, «Toughened Plastics», Appl. Science Publishers, London 1977, beschrieben sind. Bevorzugte Polymerisate (C) besitzen einen Gelgehalt von über 20 Gew.-%, vorzugsweise über 40 Gew.-%.

Bevorzugte Polymerisate (C) sind Ethylen/Vinylacetat-Copolymerisate mit 15–45 Gew.-% Vinylacetatresten und Schmelzindices von nicht fliessfähig bis 1000, vorzugsweise von 0,1–20, gemessen bei 190°C und 2,16 kp Belastung nach DIN 53 735.

Bevorzugte Polymerisate (C) sind z.B. die sogenannten EPM- bzw. EPDM-Kautschuke, in denen das Gew.-Verhältnis von Ethylen- und Propylenresten im Bereich von 40:60 bis 65:35 liegt.

Die Mooney-Viskositäten (ML1 + 4/100°C) der unvernetzten EPM- bzw. EPDM-Kautschuke liegen zwischen 25–100, vorzugsweise zwischen 35–90. Die Gelgehalte der unvernetzten EPM- bzw. EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1–20 Doppelbindungen/1000 C-Atome aufweisen können. Als geeignete Dien-monomere im EPDM seien beispielsweise genannt: konjugierte Diene, z.B. Isopren und Butadien, und nicht-konjugierte Diene mit 5–25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkenylnorbornene, z.B. 5-Ethyldien-2-norbornen, 5-Butyldien-2-norbornen, 2-Methallyl-5-norbornen, 2-Isopropenyl-5-norbornen und Tricyclodiene, z.B. 3-Methyl-tricyclo-(5,2,1,0,2,6)-3,8-decadien. Bevorzugt seien die nicht-konjugierten Diene Hexadien-1,5, Ethyliden-norbornen oder Dicyclopentadien angeführt. Der Diengehalt im EPDM beträgt vorzugsweise 0,5–10 Gew.-%.

Derartige EPM- bzw. EPDM-Kautschuke sind z.B. in der DE-OS 2 808 709 beschrieben.

Bevorzugte Polymerisate (C) sind auch selektiv hydrierte Blockcopolymerisate eines vinylaromatischen Monomeren (X) und eines konjugierten Diens (Y) vom X-Y-Typ. Diese Blockcopolymerisate können nach bekannten Verfahren hergestellt werden. Im allgemeinen kann für die Herstellung der geeigneten X-Y-Blockcopolymerisate aus Styrol, α-Methylstyrol, Vinyltoluol usw. und aus konjugierten Dienen, wie Butadien, Isopren usw., die für die Herstellung von Styrol-Dien-Blockcopolymerisaten verwendete Technologie benutzt werden, die in «Encyclopedia of Polymer Science and Technology», Bd. 15, Interscience, N.Y. (1971) auf den Seiten 508 ff. beschrieben ist. Die selektive Hydrierung kann auf an sich bekannten Wegen durchgeführt werden und bedeutet, dass die ethylenischen Doppelbindungen im wesentlichen vollständig hydriert werden, wobei die aromatischen Doppelbindungen im wesentlichen unbeeinflusst bleiben. Derartige selektiv hydrierte Blockcopolymerisate werden z.B. in der DE-OS 3 000 282 beschrieben.

Bevorzugte Polymerisate (C) sind z.B. mit Styrol und/oder Acrylnitril und/oder (Meth)Acrylsäurealkylestern gepfropfte Polybutadiene, Butadien/Styrol-Copolymerisate und Poly(meth)acrylsäureester, z.B. auch Copolymerisate aus Styrol oder Alkylstyrol und konjugierten Dienen (schlagfestes Polystyrol), d.h. Copolymerisate der in der DE-OS 1 694 173 (= US-PS 3 564 077) beschriebenen Art; bevorzugte Pfropfpolymerisate (C) sind z.B. auch mit Acryl- oder Methyacrylsäureestern oder mit Vinylacetat oder mit Acrylnitril oder mit Styrol oder mit Alkylstyrolen gepfropfte Polybutadiene, Butadien/Styrol-Copolymerisate, Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate (C) sind z.B. ABS-Polymerisate, wie sie z.B. in der DE-OS

2 035 390 (= US-PS 3 644 574) oder in der DE-OS 2 248 242 (= GB-PS 1 409 275) beschrieben sind.

Besonders bevorzugte Polymerisate (C) sind z.B. Pfropfpolymerisate, die durch Pfropfreaktion von

I.
10–40, vorzugsweise 10–35, insbesondere 15–25 Gew.-%, bezogen auf Pfropfprodukt, mindestens eines (Meth)-Acrylsäureesters und/oder eines Gemisches aus
10–35, vorzugsweise 20–35 Gew.-%, bezogen auf Gemisch, Acrylnitril und
65–90, vorzugsweise 65–80 Gew.-%, bezogen auf Gemisch, Styrol auf

II.
60–90, vorzugsweise 65–90, insbesondere 75–85 Gew.-%, bezogen auf Pfropfprodukt, eines Butadien-Polymerisats mit mindestens 70 Gew.-%, bezogen auf II, Butadienresten als Pfropfgrundlage erhältlich sind, wobei vorzugsweise der Gelanteil der Pfropfgrundlage II ⩾ 70% (in Toluol gemessen), der Pfropfgrad G 0,15 bis 0,55 und der mittlere Teilchendurchmesser $d_{50}$ des Pfropfpolymerisats (C) 0,2 bis 0,6, vorzugsweise 0,3 bis 0,5 µm betragen.

(Meth)Acrylsäureester I sind Ester der Acrylsäure bzw. Methacrylsäure und einwertiger Alkohole mit 1 bis 8 C-Atomen.

Die Pfropfgrundlage II kann neben Butadienresten bis zu 30 Gew.-% bezogen auf II, Reste anderer ethylenisch ungesättigter Monomerer, wie z.B. Styrol, Acrylnitril, Ester der Acryl- oder Methacrylsäure mit 1–4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, enthalten die erfindungsgemäss einzusetzenden Propfpolymerisate (C) neben den eigentlichen gepfropften Polymeren auch Homo- und gegebenenfalls Copolymerisate der zur Pfropfung eingesetzten Pfropfmonomeren I.

Der Pfropfgrad G bezeichnet das Gewichtsverhältnis von aufgepfropften Pfropfmonomeren zur Pfropfgrundlage und ist dimensionslos.

Die mittlere Teilchengrösse $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid. Z. und Z. Polymere 250 (1972), 782–796) oder mittels Elektronenmikroskopie und anschliessende Teilchenauszählung (G. Kämpf, H. Schuster, Angew. Makromolekulare Chemie 14, (1970), 111–129) oder mittels Lichtstreuungsmessungen.

Besonders bevorzugte Polymerisate (C) sind z.B. auch Pfropfpolymerisate aus
(a) 25–98 Gew.-%, bezogen auf Pfropfpolymerisat (C), Acrylatkautschuk mit einer Glasübergangstemperatur unter -20°C als Pfropfgrundlage und
(b) 2–75 Gew.-% bezogen auf Pfropfpolymerisat (C), mindestens eines polymerisierbaren, ethylenisch ungesättigten Monomeren, dessen bzw. deren in Abwesenheit von (a) entstandene Homo- bzw. entstandene Copolymerisate eine Glasübergangstemperatur über 25°C hätten, als Pfropfmonomere.

Die Acrylatkautschuke (a) der Polymerisate (C) sind vorzugsweise Polymerisate aus Acrylsäurealkylestern, gegebenenfalls mit bis zu 40 Gew.-% anderer polymerisierbarer ethylenisch ungesättigter Monomerer. Sofern die als Pfropfgrundlage (a) eingesetzten Acrylatkautschuke (wie auf Seite 5 oben beschrieben) ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl-, Ethyl-, Butyl-, Octyl- und 1-Ethylhexylester; Halogenalkylester, vorzugsweise Halogen-$C_1$-$C_8$-Alkylester, wie Chlorethylacrylat und aromatische Ester wie Benzylacrylat und Phenethylacrylat. Sie können einzeln oder in Mischung eingesetzt werden.

Die Acrylkautschuke (a) können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3–12 C-Atomen oder gesättigter Polyole mit 2–4 OH-Gruppen mit 2–20 C-Atomen, wie z.B. Ethylenglykoldimethacrylat oder Allylmethacrylat; ausserdem mehrfach ungesättigte heterocyclische Verbindungen, wie z.B. Trivinyl- und Triallylcyanurat und -isocyanurat, Tris-acryloyl-s-triazine, ausserdem polyfunktionelle Vinylverbindungen, wie Di- und Trivinylbenzole; aber auch Triallylphosphat und Diallylphthalat.

Bevorzugte vernetzende Monomere sind Allylmethycrylat, Ethylenglykoldimethacrylat, Diallylphthalat und heterocyclische Verbindungen, die mindestens drei ethylenisch ungesättigte Gruppen aufweisen.

Besonders bevorzugte vernetztende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5 Gew.-%, insbesondere 0,05 bis 2 Gew.-%, bezogen auf Pfropfgrundlage (a).

Bei cyclischen vernetzenden Monomeren mit mindestens drei ethylenisch ungesättigten Gruppen ist es vorteilhaft, ihre Menge auf < 1 Gew.-% der Pfropfgrundlage (a) zu beschränken.

Bevorzugte «andere» polymerisierbare ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide,

Vinyl-$C_1$-$C_6$-alkylether. Bevorzugte Acrylatkautschuke als Pfropfgrundlage (a) sind Emulsionspolymerisate, die einen Gelgehalt von $\geqslant$ 60 Gew.% aufweisen.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80 Gew.-%, bevorzugt 10–50 Gew.-%, bezogen auf (a), betragen. Schale und Kern können unabhängig voneinander unvernetzt, teilvernetzt oder hochvernetzt sein.

Besonders bevorzugte Pfropfgrundlagen (a) für Pfropfpolymerisate (C) auf Basis von Polyacrylsäureestern seien nachfolgend zusammengefasst:

1. Acrylsäureesterpolymerisate und -copolymerisate ohne Dienkautschukkern und
2. Acrylsäureesterpolymerisate und -copolymerisate, die einen Dienkautschukkern enthalten.

Die Pfropfausbeute, d.h. der Quotient aus der Menge des aufgepfropften Monomeren (b) und der Menge des eingesetzten Pfropfmonomeren (b) beträgt in der Regel 20 bis 80 Gew.%. Die Bestimmung kann, wie bei M. Hoffmann, H. Krömer, R. Kuhn, Polymeranalytik, Bd. 1, Georg Thieme Verlag, Stuttgart 1977, beschrieben, erfolgen.

Bevorzugte Pfropfmonomere (b) sind α-Methylstyrol, Styrol, Acrylnitril, Methylmethycrylat oder Mischungen dieser Monomeren. Bevorzugte Pfropfmonomermischungen sind solche aus Styrol und Acrylnitril im Gewichtsverhältnis 90:10 bis 50:50.

Solche Pfropfpolymerisate (C) auf Basis von Polyacrylsäureestern werden z.B. in der DE-AS 2 444 584 (= US-PS 4 022 748) und in der DE-OS 2 726 256 (= US-PS 4 096 202) beschrieben.

Besonders vorteilhafte Pfropfpolymerisate dieser Art erhält man, wenn man 2–20 Gew.-%, vorzugsweise 2–15 Gew.-%, bezogen auf (C), Monomer (b) auf 80–98, vorzugsweise 85–97 Gew.-%, bezogen auf (C), des vollständig gebrochenen und in Wasser aufgeschlämmten Latex von (a) in Abwesenheit von Suspendiermittel aufpfropft. Das anfallende pulverförmige Pfropfpolymerisat kann anschliessend getrocknet und im gewünschten Verhältnis unter Einwirkung von Scherkräften mit den anderen Komponenten so homogenisiert werden, dass die mittlere Teilchengrösse $d_{50}$ von (C) in der erfindungsgemässen Mischung 0,05 bis 3 µm, vorzugsweise 0,1 bis 2 µm, insbesondere 0,2 bis 1 µm beträgt.

Der Begriff «in Abwesenheit von Suspendiermittel» bedeutet die Abwesenheit von Stoffen, die nach Art und Menge die Pfropfmonomeren (b) in der wässrigen Phase suspendieren könnten. Die Definition schliesst die Anwesenheit von Stoffen nicht aus, die z.B. bei der Herstellung einer gepfropften Pfropfgrundlage (a) suspendierend gewirkt haben; in derartigen Fällen muss das Koagulations- oder Fällungsmittel, das zum Brechen des Latex (a) eingesetzt wird, in einer Menge zugesetzt werden, die die suspendierende Wirkung der in der Vorstufe eingesetzten Stoffe kompensiert; mit anderen Worten: Es muss darauf geachtet werden, dass die Pfropfmonomeren (b) in der wässrigen Phase keine (stabile) Emulsion ergeben.

Ein derart in Abwesenheit von Suspendiermittel hergestelltes Pfropfpolymerisat (C) ist als Bestandteil der erfindungsgemässen Formmassen in den anderen Harzkomponenten zu einer aussergewöhnlichen niedrigen Teilchengrösse verteilbar, die relativ unverändert auch längere Verarbeitungszeiten bei höherer Temperatur übersteht.

Der Begriff «aussergewöhlich niedrige Teilchengrösse» meint, dass Anzahl, Form und Grösse der einzusetzenden Pfropfpolymerisatteilchen mit Anzahl, Form und Grösse der in die geschmolzenen anderen Harzkomponenten eingebrachten Pfropfpolymerisatteilchen auch nach dem Homogenisieren im wesentlichen noch übereinstimmen.

Als Pfropfgrundlage (a) können auch solche Acrylatkautschuke verwendet werden, die als wässrige Emulsion (Latex) anfallen und deren Latexpartikel 1–20 Gew.-%, vorzugsweise 1–10 Gew.-%, bezogen auf (a), bereits in wässriger Emulsion aufgepfropfte Monomere enthalten, deren Homo- bzw. Copolymerisate Glasübergangstemperaturen > 0°C aufweisen würden.

Bevorzugte derartige aufgepfropfte Monomere sind Alkylacrylate, Alkylmethacrylate, Styrol, Acrylnitril, α-Methylstyrol und/oder Vinylacetat.

Derartige Pfropfgrundlagen (a) werden z.B. durch Emulsionspolymerisation oder Emulsionspfropfpolymerisation hergestellt. Man kann sie aber auch so herstellen, dass man einen Acrylatkautschuk in Lösung oder Masse herstellt, dann die Pfropfmonomeren aufpfropft und anschliessend diese Kautschuke in eine wässrige Emulsion, die sich für weitere Pfropfverfahren eignet, überführt.

Als Pfropfgrundlagen (a) für Acrylatkautschuke dieser besonderen Ausführungsform eignen sich also vorzugsweise neben den auf Seite 12 aufgezählten Polymerisaten auch in wässriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten polymerisierbaren Monomeren.

Die Komponente (D)

Die erfindungsgemäss einzusetzenden Thermoplasten auf Polyetherimidbasis sind beispielsweise solche mit Struktureinheiten der Formel (I)

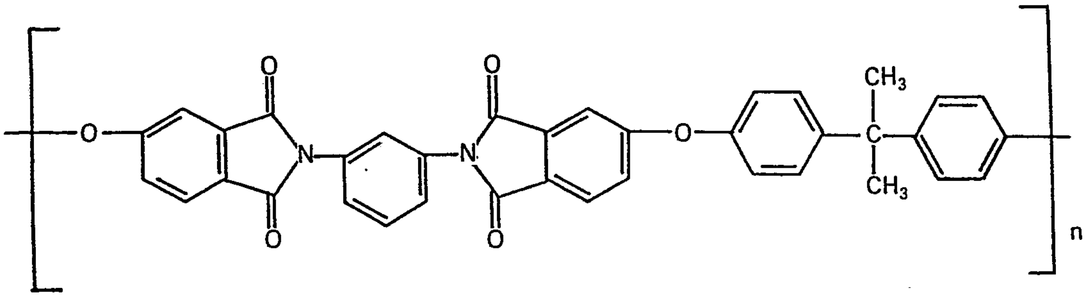

(I)

worin «n» der Polymerisationsgrad ist, der zu einem Zahlenmittel des Molekulargewichtes ($\overline{M}_n$) zwischen 10 000 und 50 000 g/Mol korrespondiert.

Die thermoplastischen Polyetherimide sind hoch wärmeformbeständig; sie haben eine Vicat-Wärmeformbeständigkeit von über 200°C, gemessen nach DIN 53 450.

Die Herstellung der Polyetherimide kann prinzipiell nach verschiedenen Verfahren mit unterschiedlichen Zwischenprodukten erfolgen. Ein gebräuchliches Verfahren geht vom N-Methylphthalimid aus. Es wird in 3-Stellung nitriert und mit dem Dinatriumsalz von Bisphenol A umgesetzt, wobei der BPA-(bis-N-methylphthalimid)-ether entsteht. Dieser wird mit m-Phenylendiamin zum hochmolekularen Polyetherimid aufkondensiert. Zur Regelung des Molekulargewichtes kann ein monofunktionelles Amin, z.B. Stearylamin, mitverwendet werden. Ein anderes Syntheseverfahren beginnt mit der Umsetzung von 3-Nitrophthalsäureanhydrid mit m-Phenylendiamin, gefolgt von einer Kondensation mit dem Dinatriumsalz von Bisphenol A. Hier werden als Molekulargwichtsregler vorteilhaft monofunktionelle Phenole eingesetzt.

Nähere Einzelheiten sind z.B. in US-Patent 3 838 097 beschrieben. Ein Beispiel für ein Polyetherimid ist das im Handel befindliche «Ultem 1000 TM ®» der Firma General Electric.

Zum Stand der Technik

Die Komponenten (A) bis (D) sind als solche bekannt.

Mischungen aus Polycarbonaten und Polyestern sind auch bekannt (siehe beispielsweise DE-PS 1 187 793, DE-AS 1 694 124 und DE-OS 2 622 414.

Mischungen aus Polyestern und gepfropften Polymerisaten sind ebenfalls bekannt (siehe beispielsweise US-PS'en 3 919 353, 3 564 077, DE-OS 2 659 338 oder US-PS 4 096 202 bzw. DE-OS 2 726 256).

Mischungen aus Polycarbonaten und Polymerisaten sind ebenfalls bekannt (siehe beispielsweise Japanische Patentpublikation Nr. 18611/68 (Teijin, Priorität 30.6.1965), US-PS 3 663 471, US-PS 3 437 631, US-PS 4 299 928 oder DE-OS 3 114 494).

Mischungen aus Polycarbonaten, Polyestern und gepfropften Polymerisaten sind ebenfalls bekannt (siehe beispielsweise US-PS 3 864 428 bzw. DE-AS 2 343 609 oder US-PS 4 264 487 bzw. EP-OS 25 920 oder US-PS 4 257 937 bwz. EP-OS 20 605 bzw. WO 80/00972 oder DE-PS 1 569 448 bzw. GB-PS 1 007 724.

Obwohl Formmassen aus Polycarbonaten, Polyestern und kautschukelastischen Polymerisaten viele positive Eigenschaften besitzen, werden sie manchen speziellen Anforderungen nicht gerecht. Bei längerer Temperaturbelastung z.B. beim Lackieren, neigen daraus hergestellte – insbesondere dünne – Formkörper zu Verzugserscheinungen.

Eine Anhebung der Wärmeformbeständigkeit solcher Formmassen auf möglichst über 120°C ist daher ein dringendes technisches Bedürfnis. Dabei sollen die bekannt guten physikalischen und chemischen Eigenschaften von Polycarbonat/Polyalkylenterephthalat-Mischungen aber weitgehend erhalten bleiben.

Aus der DE-OS 3 118 697 sind zwar thermoplastische Formmassen auf Basis von Polycarbonat, Polyalkylenterephthalat und gegebenenfalls einem oder mehreren Polymerisaten bekannt, deren Verzugsverhalten durch die Anwesenheit geringer Mengen an o,o,o',o'-Tetramethylbisphenol-Polycarbonat ausserordentlich positiv beeinflusst wird. Doch diese Mischungen haben den Nachteil, dass ihre Zähigkeit durch die Anwesenheit des o,o,o',o'-Tetramethylbisphenol-Polycarbonates deutlich verschlechtert wird.

Die erfindungsgemässe Mischung zeigt diesen Nachteil nicht.

Die deutliche Erhöhung der Vicat-Temperatur der erfindungsgemässen Mischung mit der Folge eines wesentlich verbesserten Verzugsverhaltens ist überraschend, weil Polycarbonat alleine durch den Zusatz von Polyetherimid in seiner Wärmeformbeständigkeit nur unwesentlich angehoben wird.

Die aus den erfindungsgemässen Formmassen hergestellten Formkörper verziehen sich infolge des Polyetherimidzusatzes auch bei Temperaturen bis 130°C nicht. Dadurch können die Formteile mit geeigneten Lacksystemen problemlos lakkiert werden und als benzinbeständige, auch bei tiefen Temperaturen schlagzähe Aussenteile an Kraftfahrzeugen verwendet werden.

Die Herstellung der erfindungsgemässen Formmassen kann in den üblichen Mischaggregaten wie Walzen, Knetern, Ein- und Mehrwellenextrudern erfolgen. Es ist dabei zweckmässig, zunächst das Polycarbonat und das Polyetherimid vorzumischen und erst in einem weiteren Arbeitsgang die restlichen Komponenten zuzumischen.

Gegenstand der vorliegenden Erfindung ist somit auch ein Verfahren zur Herstellung von Formmassen aus

(A) 95 bis 50 Gew.-Teilen thermoplastischen, aromatischer Polycarbonate mit Gewichtsmittelmolekulargewichten $\overline{M}_w$ zwischen 10 000 und 200 000 ($\overline{M}_w$ ermittelt mittels Lichtstreuung),

(B) 50 bis 5 Gew.-Teilen thermoplastischen Polyalkylenterephthalate, und gegebenenfalls

(C) 0 bis 30, vorzugsweise 1 bis 20, insbesondere 3 bis 15 Gew.-Teilen eines kautschukelastischen Polymerisats mit einer Glasübergangstemperatur von unter −20°C, wobei die Summe der Gewichtsteile aus (A) + (B) + (C) jeweils 100 Gew.-Teile beträgt, und

(D) 1 bis 20 Gew.-%, vorzugsweise 1 bis 16 Gew.-% und insbesondere 2 bis 10 Gew.-%, bezogen auf die Summe aus (A) + (D), eines Thermoplasten (D) auf Polyetherimidbasis, das dadurch gekennzeichnet ist, dass die Komponenten (A) und (D) in einem geeigneten Mischaggregat bei Temperaturen zwischen 290°C und 350°C homogenisiert und anschliessend granuliert werden und man in einem weiteren Arbeitsgang bei Temperaturen zwischen 260°C und 290°C die Komponenten (B) und gegebenenfalls die Komponente (C) zumischt.

Die erfindungsgemässen Formmassen können zur Erhöhung der Benzinfestigkeit bis zu 5 Gew.-Teile, bezogen auf Gesamtgewicht aus den Komponenten (A) + (B) + (C) + (D), Ethylenmono- bzw. -copolymerisate enthalten. Ethylencopolymerisate in diesem Sinne sind Polyethylene, deren Reste neben Ethylenresten bis zu 30 Gew.-%, bezogen auf Ethylencopolymerisat, aus Resten anderer copolymerisierbarer Monomerer bestehen. Andere copolymerisierbare Monomere für die Herstellung dieser Ethylencopolymerisate sind z.B. (Meth)Acrylsäure und die oben für die Herstellung von Pfropfgrundlage und Pfropfauflage für Polymerisat (C) aufgezählten Monomeren.

Die erfindungsgemässen Formmassen können die für Polycarbonate und/oder Polyester üblichen Additive, wie Gleit- und Entformungsmittel, Nukleiermittel, Stabilisatoren, Füll- und Verstärkungsstoffe, Flammenschutzmittel, und/oder Farbstoffe enthalten.

Die gefüllten bzw. verstärkten Formmassen können bis zu 30 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Polyesterformmassen enthalten Flammschutzmittel in einer Konzentration von im allgemeinen weniger als 30 Gew.-%, bezogen auf die flammengeschützten Formmassen.

Es kommen die für Polycarbonate bzw. Polyester bzw. kautschukelastische Polymerisate bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Ausserdem enthalten sie in der Regel einen Synergisten, wie z.B. Antimontrioxid.

Die erfindungsgemässen Formmassen aus Polycarbonaten, Polyalkylenterephthalaten und Thermoplasten auf Polyetherimidbasis und gegebenenfalls kautschukelastischen Polymerisaten und gegebenenfalls den genannten weiteren Zusätzen können zu Formkörpern wie Stossstangen, Rammleisten oder Radkappen verarbeitet werden, finden also beispielsweise im Aussenbereich von Automobilen Verwendung.

Beispiele

Verwendete Komponenten

I.

Polycarbonat hergestellt in bekannter Weise aus Bis-phenol-A, Phenol und Phosgen, relative Viskosität 1,285, gemessen in Dichlormethan bei 25°C in 0,5 g pro 100 ml Lösungsmittel.

II.

Polyetherimid der Firma General Electric mit der Handelsbezeichnung «Ultem 1000 TM® Resin». Das Produkt hat die auf Seite 5 angegebene chemische Struktur. Das Zahlenmittel des Molekulargewichtes beträgt 19 200 (gemessen nach der Methode der Dampfdruckosmose). Die relative Lösungsviskosität beträgt 1,228 gemessen in Dichlormethan bei 25°C in Konzentration von 0,5 g pro 100 ml Lösungsmittel.

III.

Polybutylenterephthalat hergestellt in bekannter Weise aus Terephthalsäuredimethylester und Butandiol-1,4 mit einer Intrinsic-Viskosität von 1,18 dl/g, gemessen in Phenol/o-Dichlorbenzol (Gew.-Verhältnis 1:1) bei 25°C im Ubbelohde-Viskosimeter.

IV.

Terpolymerisat hergestellt in bekannter Weise aus Ethylen, Acrylsäure und tert.-Butylacrylat im Gew.-Verhältnis 89:4:7 mit einem Schmelzindex von 6–8 g/10 min. (gemessen bei 190°C und 2,16 kp Belastung nach DIN 53 735) und einer Dichte von 0,924 g/cm³ (gemessen nach DIN 53 479).

V.

Pfropfpolymerisat, 80% Pfropfgrundlage aus vernetztem Polybutadien (Gelgehalt über 70%), gemessen in Toluol) und 20% Pfropfauflage aus 72 Teilen Styrol und 28 Teilen Acrylnitril, hergestellt in bekannter Weise.

VI.

Polycarbonat aus o,o,o',o'-Tetramethylbisphenol A, Phenol und Phosgen, relative Viskosität 1,29 in Dichlormethan bei 25°C in 0,5 g pro 100 ml Lösungsmittel.

Herstellung der Formmassen

Zunächst werden das Polycarbonat und das Polyetherimid in einem Zweiwellenextruder unter Stickstoffatmosphäre bei Temperaturen von 320°C aufgeschmolzen und homogenisiert. In einem weiteren, analogen Herstellungsschritt werden dann die restlichen Komponenten und die Vormischung homogenisiert. Der Schmelzestrang wird vor dem Austritt aus der Düse entgast, in Wasser abgekühlt, granuliert und getrocknet. Die Verarbeitung erfolgt auf einer Spritzgussmaschine.

Die Tabelle I enthält die Ergebnisse.

| Beispiel | Komponenten in Gewichtsteilen bezogen auf das Gesamtgewicht der Abmischung | | | | | | Massetemp. Extruder | Spritzguss | $a_K$ bei[1] RT | $a_K$ bei[1] -40°C | Vicat B[2] |
|---|---|---|---|---|---|---|---|---|---|---|---|
| | I | II | III | IV | V | VI | (°C) | (°C) | | | (°C) |
| Vergleich | 100 | – | – | – | – | – | 320 | 310 | 43 | – | 148 |
| Vergleich | 90,9 | 9,1 | – | – | – | – | 320 | 310 | 37 | 8 | 150 |
| Vergleich | 90,9 | – | – | – | – | 9,1 | 320 | 310 | 27 | 6 | 152 |
| Vergleich | 53 | – | 40 | 2 | 5 | – | 270 | 270 | 37 | 12 | 120 |
| Beispiel | 49 | 4 | 40 | 2 | 5 | – | 270 | 270 | 39 | 11 | 128 |
| Vergleich | 49 | – | 40 | 2 | 5 | 4 | 270 | 270 | 19 | 8 | 127 |

1) $a_K$ gemessen nach ISO/R 179 (DIN 53 453)
2) Vicat-Erweichungstemperatur Methode B gemessen nach ISO 306 (DIN 53 460)

**Patentansprüche**

1. Thermoplastische Formmassen enthaltend
(A) 95 bis 50 Gew.-Teile thermoplastische, aromatische Polycarbonate mit Gewichtsmittelmolekulargewichten $\overline{M}_w$ zwischen 10 000 und 200 000 ($\overline{M}_w$ ermittelt mittels Lichtstreuung)
(B) 50 bis 5 Gew.-Teile thermoplastische Polyalkylenterephthalate und gegebenenfalls
(C) 0 bis 30 Gew.-Teile eines kautschukelastischen Polymerisats mit einer Glasübergangstemperatur von unter −20°C,
wobei die Summe der Gewichtsteile aus (A) + (B) + (C) jeweils 100 Gew.-Teile beträgt, dadurch gekennzeichnet, dass die Polycarbonatkomponente (A) 1 bis 20 Gew.-%, bezogen auf die Summe aus (A) + (D) eines Thermoplasten (D) auf Polyetherimidbasis enthält.

2. Formmassen nach Anspruch 1, dadurch gekennzeichnet, dass die Polycarbonatkomponente (A) 1 bis 16 Gew.-%, bezogen auf die Summe aus (A) + (D) des Thermoplasten (D) auf Polyetherimidbasis enthält.

3. Formmassen nach Anspruch 1, dadurch gekennzeichnet, dass die Polycarbonatkomponente (A) 2 bis 10 Gew.-%, bezogen auf die Summe aus (A) + (D), des Thermoplasten (D) auf Polyetherimidbasis enthält.

4. Formmassen gemäss Anspruch 1, bestehend aus den Komponenten (A) + (B) + (D) und gegebenenfalls (C), die noch Ethylenhomo- bzw. copolymerisate, Gleitmittel, Entformungsmittel, Nukleiermittel, Stabilisatoren, Füllstoffe, Verstärkerstoffe, Flammschutzmittel oder/und Farbstoffe enthalten.

5. Verfahren zur Herstellung der Formmassen der Ansprüche 1 bis 4, dadurch gekennzeichnet, dass die Komponenten (A) und (D) in einem geeigneten Mischaggregat bei Temperaturen zwischen 290°C und 350°C homogenisiert und anschliessend granuliert werden und man in einem weiteren Arbeitsgang bei Temperaturen zwischen 260°C und 290°C die Komponente (B) und gegebenenfalls die Komponente (C) und/oder gegebenenfalls Ethylenhomo- bzw. -copolymerisate, Gleitmittel, Entformungsmittel, Nukleiermittel, Stabilisatoren, Füllstoffe, Verstärkungsstoffe, Flammschutzmittel oder/und Farbstoffe zumischt.

**Claims**

1. Thermoplastic moulding compounds containing
(A) 95 to 50 parts by weight of thermoplastic aromatic polycarbonates having a weight average molecular weight $\overline{M}_w$ of from 10,000 to 200,000 ($\overline{M}_w$ determined by light scattering)
(B) 50 to 5 parts by weight of thermoplastic polylkylene terephthalates and optionally
(C) 0 to 30 parts by weight of a rubbery elastic polymer having a glass transition temperature below −20°C, the sum of the parts by weight of (A) + (B) + (C) in all cases amounting to 100 parts by weight, characterised in that polycarbonate component (A) contains from 1 to 20% by weight, based on the sum of (A) + (D), of a thermoplast (D) based on polyetherimide.

2. Moulding compounds according to claim 1, characterised in that polycarbonate component (A) contains from 1 to 16% by weight, based on the sum of (A) + (D), of the polyether imide-based thermoplast (D).

3. Moulding compounds according to claim 1, characterised in that polycarbonate component (A) contains from 2 to 10% by weight, based on the sum of (A) + (D), of the polyether imide-based thermoplast (D).

4. Moulding compounds according to claim 1 consisting of components (A) + (B) + (D) and optionally (C), in addition containing ethylene homo- and copolymers, lubricants, mould release agents, nucleating agents, stabilisers, fillers, reinforcing materials, flame retardants and/or dyes.

5. Process for the preparation of moulding compounds of claims 1 to 4, characterised in that components (A) and (D) are homogenised in a suitable mixing apparatus at temperatures from 290°C to 350°C and then granulated and in a further step of the process component (B) and optionally component (C) and/or optionally ethylene homo- and copolymers, lubricants, mould release agents, nucleating agents, stabilisers, fillers, reinforcing materials, flame retardants and/or are added at temperatures from 260°C to 290°C.

**Revendications**

1. Matières thermoplastiques à mouler, contenant

(A) 95 à 50 parties en poids de polycarbonates aromatiques thermoplastiques ayant des poids moléculaires moyens en poids $\overline{M}_p$ compris entre 10 000 et 200 000 ($\overline{M}_p$ déterminé par dispersion de la lumière)

(B) 50 à 5 parties en poids de poly(téréphtalates d'alkylènes) thermoplastiques, et éventuellement

(C) 0 à 30 parties en poids d'un polymère ayant l'élasticité du caoutchouc et présentant une température de transition vitreuse inférieure à −20°C,

la somme des parties en poids de (A) + (B) + (C) formant à chaque fois 100 parties en poids, matières caractérisées en ce que le composant polycarbonate (A) contient 1 à 20% en poids, par rapport à la somme de (A) + (D), d'un thermoplastique (D) à base de polyétherimide.

2. Matières à mouler selon la revendication 1, caractérisées en ce que le composant polycarbonate (A) contient 1 à 16% en poids, par rapport à la somme de (A) + (D), du thermoplastique (D) à base de polyétherimide.

3. Matières à mouler selon la revendication 1, caractérisées en ce que le composant polycarbonate (A) contient 2 à 10% en poids, par rapport à la somme de (A) + (D), du thermoplastique (D) à base de polyétherimide.

4. Matières à mouler selon la revendication 1, consistant en les composants (A) + (B) + (D) et éventuellement (C), qui contiennent encore des homopolymères ou copolymères de l'éthylène, du lubrifiant, de l'agent de démoulage, des agents de formation de germes, des stabilisants, des charges, des matières de renforcement ou d'armature, des agents de protection contre la flamme et/ou des colorants.

5. Procédé pour préparer les matières à mouler des revendications 1 à 4, caractérisé en ce qu'on homogénéise dans un mélangeur convenable, à des températures comprises entre 290°C et 350°C, les composants (A) et (D), puis on les granule et, dans une autre phase opératoire, on incorpore par mélangeage, à des températures comprises entre 260°C et 290°C, le composant (B) et éventuellement le composant (C) et/ou éventuellement des homopolymères ou copolymères de l'éthylène, des lubrifiants, des agents de démoulage, des agents de formation de germes, des stabilisants, des charges, des matières de renforcement ou d'armature, des agents de protection contre la flamme et/ou des colorants.